## Europäisches Patentamt
## European Patent Office
## Office européen des brevets

(11) Publication number: **0 166 486 B1**

## (12) EUROPEAN PATENT SPECIFICATION

(45) Date of publication of patent specification: **20.12.89**

(21) Application number: **85200953.9**

(22) Date of filing: **17.06.85**

(51) Int. Cl.⁴: **A 01 J 25/15**

(54) An apparatus for simultaneously pressing one or more moulds containing curd and provided with a follower, as well as a presser head and foam cushion to be employed in the apparatus.

(30) Priority: **18.06.84 NL 8401923**

(43) Date of publication of application:
**02.01.86 Bulletin 86/01**

(45) Publication of the grant of the patent:
**20.12.89 Bulletin 89/51**

(84) Designated Contracting States:
**AT BE DE FR IT NL**

(56) References cited:
**EP-A-0 064 314**
**FR-A-2 308 582**
**NL-A-6 408 260**
**NL-A-8 104 030**
**US-A-4 045 152**

(73) Proprietor: **Tebel B.V.**
**Zwettestraat 30**
**NL-8912 AV Leeuwarden (NL)**

(72) Inventor: **ter Horst, Egbert**
**P. Walmastrjitte 35**
**NL-8625 HE Oppenhuizen (NL)**
Inventor: **Sipma, Symen**
**Trekker 115**
**NL-8447 BV Heerenveen (NL)**

(74) Representative: **Smulders, Theodorus A.H.J., Ir. et al**
**Vereenigde Octrooibureaux Nieuwe Parklaan 107**
**NL-2587 BP 's-Gravenhage (NL)**

Courier Press, Leamington Spa, England.

## Description

The present invention relates to an apparatus for simultaneously pressing curd contained in a plurality of moulds each provided with a follower, comprising a supporting bottom on which the moulds can be placed; a presser head disposed above the supporting bottom and movable towards and away from the moulds and pressing means which, via the presser head, are able to exert controllable pressure on the followers, said presser head being provided at the side facing the moulds with a resiliently deformable covering of a foam material having a closed cell structure. The invention also relates to a presser head for such an apparatus.

Such an apparatus is disclosed in Dutch patent application NL—A—8104030 and comprises a presser member or presser head, designed to exert pressure on curd in a mould via a follower lying on top of the curd. The follower is a kind of cover of the mould which may be pushed at least partly into the mould. The covering of the known presser head may consist of a foamed rubber having a closed cell structure or a foamed synthetic plastics material having a closed cell structure. Preferably, the free side of the covering is provided with a thin layer of dense material. The prior art apparatus, within the scope of the simultaneous and stepwise pressing at increasing pressure of the curd present in a plurality of moulds, is destined in particular for balancing the differences in local pressing forces due to differences in curd block height and/or to mould dimensions.

It is an object of the present invention to provide an apparatus of the above described type, wherein there is no or at least substantially no mutually lateral influencing of the stress characteristics in adjoining pressure regions of the resiliently deformable covering during the simultaneous pressing of a plurality of moulds of unequal dimensions or with differences in curd block height.

According to the present invention, to this effect, the resiliently deformable covering of foam material is provided at the side facing the moulds with studs of the foam material uniformly distributed over the covering material and integrally connected thereto.

It is a further object of the present invention to provide a pressure head for use in an apparatus according to the invention. Thus according to the present invention a presser head composed of a rigid presser frame and a resiliently deformable covering of a foam material having closed cells is characterized in that the resiliently deformable covering at the side facing away from the presser frame is provided with studs of the foam material uniformly distributed over the covering material and integrally connected thereto.

According to a further elaboration of the apparatus according to the present invention, wherein the presser head is an assembly of a rigid frame backing the resiliently deformable covering, the rigid frame is a plate having anchors foamed into the resiliently deformable covering. Thus, there is realized a proper anchoring of the covering, allowing said attachment achieved through mechanical anchoring to be further reinforced by means of adhesive or lute.

According to a further preferred embodiment, the edges of the covering are rounded, since it has been found in practice that sharp edges have the tendency to tear.

It will be clear that the dimensions of the moulds employed, as well as e.g. the ratio of the diameter of the follower and the cheese may influence the design to be selected of the presser head, in particular of the covering, with the possibility of selecting more or less studs per unity of surface. It has been experimentally found that in conjunction with the moulds employed for the conventional types of cheese having rinds, a covering whose distribution density of the studs is 800 studs/m$^2$ and whose studs have a circular cross-section, with a ratio of the height of the studs to the diameter of approximately 1/1, is quite satisfactory.

Although such studs of straight circular-cylindrical form, in combination with the above stud density, have provided optimum results in practice, the covering of the presser head is not restricted to such an embodiment. Another distribution density may be desirable in practice and is possible. For instance, the studs may have a frustoconical form, the free end of the studs having the smallest diameter. However, it is also possible to use studs of e.g. rectangular cross-sections.

The circumferential dimensions of the presser head depend on the mould dimension, as well as on the desired quantity of moulds to be pressed simultaneously. The presser head may consist of a single frame backing the covering which is formed of a plurality of cushions composing the entire covering. It is effective to use cushions of such design that these contain 13×13 studs at a length and width dimension of about 500×500 mm.

The covering material may be foamed rubber or a foamed synthetic plastics material, while in particular polyurethane foam material is quite satisfactory. The specific mass of the foam may suitably be about 0.13—0.14 kg/dm$^3$ to e.g. 0.05 kg/dm$^3$.

The foam body employed in the apparatus according to the present invention should be of the type having closed foam cells. On application of a foam material having open cells, the covering exhibits an air cushion effect during the pressing. In practice this would mean that the localized pressing effects produced by the studs, on the basis of which pressing force differences due to differences in curd block height, whether or not increased by differences in height due to mould construction, e.g. on application of moulds whose followers are provided with an upright annular flange, are to be kept within technologically permissible limits, are opposed by lateral influencing through the open cells.

For hygienic reasons and for reasons of a greater resistance to mechanical load, it is advantageous to provide the foam body with an entirely closed skin of the same material, so to design the covering as a so-called integral foam material.

In summary, the advantages of the presser head employed in the apparatus according to the present invention are that one or more cheeses, whether or not of the same type and dimension, can be pressed simultaneously with it. Moreover, the pressing force differences due to differences in curd block height, or of differences in height due to the mould or follower construction, remain within technologically permissible limits, while the form of the ready cheeses satisfies the practical requirements.

The present invention will now be explained, by way of example, with reference to the accompanying drawings, showing a foam covering to be used for the presser head. In the drawings:

Fig. 1 is a diagrammatic side view of a distribution grid for the studs of a foam cushion, of number of which can be combined with each other to the ready covering;

Fig. 2 is a diagrammatic cross-section of a distribution grid as shown in Fig. 1;

Fig. 3 is a top view of a part of the junction area of four combined foam cushions, and

Fig. 4 is a side view of the junction area shown in Fig. 3.

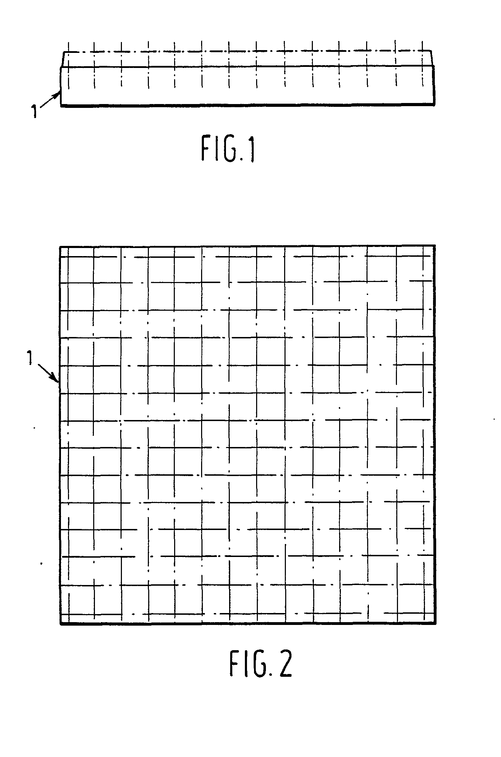

With a grid distribution for 13×13 studs, 169 studs in total, the foam cushion 3 in Fig. 2 shows an embodiment of such a cushion having the dimensions 490×490 mm.

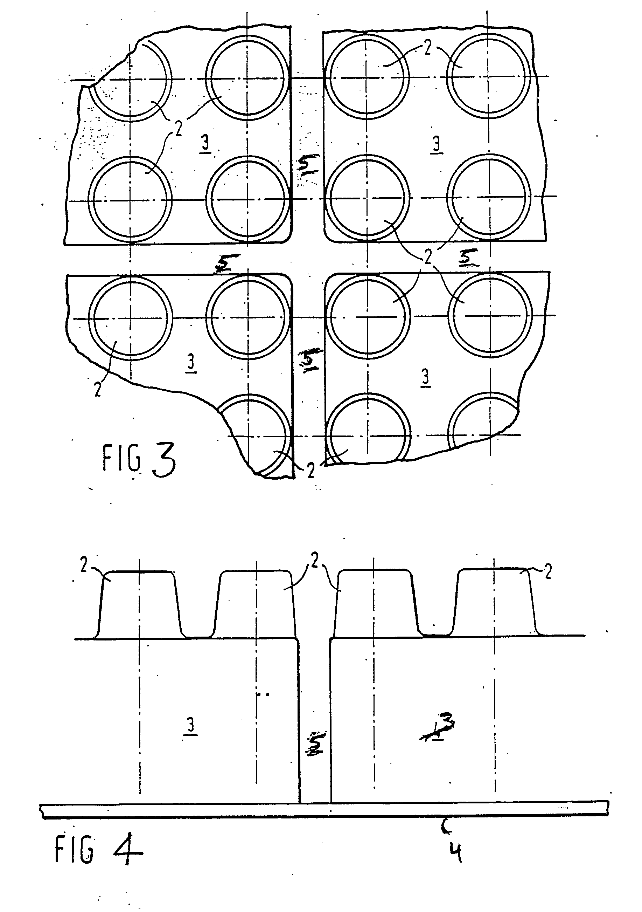

The embodiment of the foam cushion, in particular the positioning of the studs 2 (Figs. 3 and 4), is chosen in such a manner that in the junction area of four combined foam cushions 3, the regularity of the distribution pattern of the studs 2 is preserved. The back plate is indicated at 4 (Fig. 4). For hygienic reasons, i.e. for a proper cleaning, it is recommendable to leave a slotted space 5 between the cushions in the junction area.

Naturally, modifications are possible in the apparatus according to the present invention, as discussed in the above and as shown in the drawings, without departing from the scope of the present invention.

## Claims

1. An apparatus for simultaneously pressing curd contained in a plurality of moulds each provided with a follower, comprising a supporting bottom on which the moulds can be placed; a presser head disposed above the supporting bottom and movable towards and away from the moulds and pressing means which, via the presser head, are able to exert controllable pressure on the followers, said presser head being provided at the side facing the moulds with a resiliently deformable covering (1) of a foam material having a closed cell structure, characterized in that the resiliently deformable covering (1) of foam material, at the side facing the moulds, is provided with studs (2) of the foam material uniformly distributed over the covering material and integrally connected thereto.

2. An apparatus according to claim 1, wherein the presser head comprises a rigid presser frame (4) backing the resiliently deformable covering, characterized in that the rigid frame is a plate (4) provided with anchors foamed into the resiliently deformable covering (1).

3. An apparatus according to claims 1—2, characterized in that the distribution density of the studs (2) is 800 studs/m$^2$ and the studs (2) have a circular-cylindrical cross-section, with a ratio of the height of the studs (2) to the diameter of about 1/1.

4. A presser head composed of a rigid presser frame (4) and a resiliently deformable covering (1) of a foam material having closed cells, suitable for use in an apparatus according to claims 1—3, characterized in that the resiliently deformable covering (1) at the side facing away from the presser frame (4) is provided with studs (2) of the foam material uniformly distributed over the covering material and integrally connected thereto.

## Patentansprüche

1. Vorrichtung zum gleichzeitigen Pressen von in mehreren Formen enthaltener Dickmilch, die jeweils mit einem Folger versehen sind, mit einem unterstützenden Boden, auf dem die Formen angeordnet werden können; mit einem Preßstempel, der oberhalb des unterstützenden Bodens angeordnet und aufwärts und weg von den Formen beweglich ist, und mit einer Preßeinrichtung, welche über den Preßstempel in der Lage ist, einen steuerbaren Druck auf die Folger auszuüben, wobei der Preßstempel an der den Formen benachbarten Seite mit einer elastisch verformbaren Umhüllung (1) aus Schaummaterial mit geschlossenzelliger Struktur versehen ist, dadurch gekennzeichnet, daß die elastisch verformabare Umhüllung (1) aus Schaummaterial an der den Formen benachbarten Seite mit gleichmäßig über das Umhüllungsmaterial verteilten und integral damit verbundenen Vorsprüngen (2) aus dem Schaummaterial versehen ist.

2. Vorrichtung enthsprechend Anspruch 1, in der der Preßstempel einen steifen Preßrahmen (4) aufweist, der die elastisch verformbare Umhüllung unterstützt, dadurch gekennzeichnet, daß der steife Rahmen eine Platte (4) ist, die mit in die elastisch verformbare Umhüllung (1) eingeschäumten Verankerungen versehen ist.

3. Vorrichtung entsprechend den Ansprüchen 1 bis 2, dadurch gekennzeichnet, daß die Verteilungsdichte der Vorsprünge (2) 800 Vorsprünge/m$^2$ beträgt und die Vorsprünge (2) einen kreiszylindrischen Querschnitt besitzen, dessen Verhältnis von Höhe der Vorsprünge (2) zum Durchmesser etwa 1:1 beträgt.

4. Preßstempel aus einem steifen Preßrahmen (4) und einer elastisch verformbaren Umhüllung (1) aus Schaummaterial mit geschlossenen Zellen, geeignet zur Verwendung in einer Vorrichtung gemäß den Ansprüchen 1 bis 3, dadurch gekennzeichnet, daß die elastisch verformbare Umhüllung (1) auf der vom Preßrahmen (4) abgewandten Seite mit Vorsprüngen (2) aus Schaummaterial versehen ist, die gleichmäßig über das Umhüllungsmaterial verteilt und integral mit ihm verbunden sind.

**Revendications**

1. Dispositif pour le pressage simultané du caillé contenu dans une pluralité de moules dont chacun est muni d'un poussoir, comprenant un fond de support sur lequel le moule peut être placé; une tête de pressage disposée au-dessus du fond de support et déplaçable vers les moules et dans le sens l'éloignant de ceux-ci, et des moyens de pressage qui, par l'intermédiaire de la tête de pressage, sont capables d'exercer une pression ajustable sur les poussoirs, ladite tête de pressage étant munie, sur le côté face aux moules, d'un couvercle (1) pouvant subir une déformation élastique, en un matériau expansé ayant une structure à cellules fermées, caractérisé en ce que couvercle (1) pouvant subir une déformation élastique, en matériau expansé, est muni sur son côté faisant face aux moules de tenons (2) en matériau expansé répartis uniformèment sur le matériau du couvercle et formés intégralement avec celui-ci.

2. Dispositif selon la revendication 1, dans lequel la tête de pression comprend un cadre de pression rigide (4) soutenant le couvercle pouvant subir une déformation élastique, caractérisé en ce que le cadre rigide est une plaque (4) munie de fixations expansées avec le couvercle (1) pouvant subir une déformation élastique.

3. Dispositif selon la revendication 1 ou 2, caractérisé en ce que la densité de distribution des tenons est de 800 tenons/m², et que les tenons ont une section transversale cylindrique circulaire, avec un rapport de la hauteur des tenons (2) au diamètre d'environ 1/1.

4. Tête de pression constituée d'un cadre de pression rigide (4) et d'un couvercle (1) pouvant subir une déformation élastique en un matériau expanse ayant des cellules fermées, appropriée pour être utilisée dans un dispositif selon les revendications 1 à 3, caractérisée en ce que le couvercle (1) pouvant subir une déformation élastique est muni, sur le côté opposé au cadre de pression (4), de tenons (2) en matériau expansé, répartis uniformément sur le matériau du couvercle, et formés intégralement avec celui-ci.

FIG.1

FIG.2

FIG 3

FIG 4